# EUROPEAN PATENT SPECIFICATION

(11) **EP 3 345 779 B1**
(45) Date of publication and mention of the grant of the patent: **26.05.2021**
(21) Application number: 17150397.2
(22) Date of filing: 05.01.2017
(51) Int. Cl.: B60K 1/04, B60K 1/00

(54) **VEHICLE BODY PART AND VEHICLE WITH INTEGRATED BATTERY SYSTEM**
FAHRZEUGKAROSSERIETEIL UND FAHRZEUG MIT INTEGRIERTEM BATTERIESYSTEM
PIÈCE DE CARROSSERIE DE VÉHICULE ET VÉHICULE ÉQUIPÉ D'UN SYSTÈME DE BATTERIE INTÉGRÉ

(43) Date of publication of application: 11.07.2018
(73) Proprietor: Samsung SDI Co., Ltd., Yongin-si, Gyeonggi-do 17084 (KR)
(72) Inventor: KLOMBERG, Stephan, 8010 Graz (AT); HOCHGATTERER, Nikolaus, 8041 Graz (AT); RETTER, Rainer, 8181 St. Rupert a. d. Raab (AT); WÜNSCHE, Ralph, 8010 Graz (AT)
(74) Representative: Gulde & Partner

(56) References cited:
- EP-A1- 2 623 353
- EP-A1- 3 070 780
- JP-A- 2013 125 617
- US-A1- 2007 087 266
- US-A1- 2014 158 444
- US-A1- 2016 257 219
- US-B1- 6 227 322

## Description

### Field of the Invention

The present invention relates to a vehicle body part with an integrated battery system carrier as well as to a battery system comprising a battery system carrier integrated in a vehicle body part. The present invention also relates to a vehicle with integrated battery system, comprising a vehicle body part forming a part of the housing of the integrated battery system.

### Technological Background

Rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Battery modules comprising a plurality of unit battery cells coupled in series and/or in parallel are used to provide the required energy density. The battery module is formed by interconnecting the electrode terminals of the plurality of unit battery cells, wherein the number of unit cells depends on the required amount of electric power.

Battery modules can be constructed either in block design or in modular design. In block designs, each battery cell is coupled to a common current collector structure and a common battery management system. In modular designs, pluralities of battery cells are connected to form battery submodules and several battery submodules are connected to form the battery module. Battery management functions may then be realized either on battery module or battery submodule level and thus interchangeability of components is improved.

A plurality of battery modules can be combined in order to realize a high-power rechargeable battery, e.g. for an electric or hybrid vehicle. One or more battery modules are mechanically and electrically integrated, equipped with a thermal management system and set up for communication with electrical consumers in order to form a battery system. The thermal management system is required to ensure safety and efficiency of the battery module by dissipating heat generated from the rechargeable batteries.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

The mechanical integration of a battery system requires appropriate mechanical connections between the individual components, e.g. of battery submodules, and between them and a supporting structure, e.g. a vehicle. These connections must be designed to remain functional during the average service life of the battery system and under the stresses provided during its use. At the same time installation space and interchangeability requirements must be met.

Mechanical integration of battery modules can be achieved by providing a carrier plate, e.g. a bottom plate, and by positioning individual battery cells or submodules thereon. Fixing the battery cells or submodules can be achieved e.g. by fitted depressions in the carrier plate, by mechanical interconnectors as bolts or screws or by confining the cells or submodules. Confinement can be achieved by fastening side plates to lateral sides of the carrier plate. Further, a cover plate may be fixed atop the cells. Additionally or alternatively, battery submodules can be mounted to a battery module while being arranged in individual casings. Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

US 2016/257219 A1 discloses a vehicle body part for a vehicle comprising a battery system. The vehicle body part is structurally integrated in the vehicle body and comprises a battery system carrier for accommodating a plurality of battery cells.

It is thus an object of the present invention to overcome or reduce at least some of the drawbacks of the prior art and to provide a solution that allows for easy assembly and disassembly of individual battery system components to and from an electric vehicle. Therein, security requirements shall be met and the systems installation space shall be decreased.

### Summary of Invention

One or more of the drawbacks of the prior art could be avoided or at least reduced by means of the present invention. According to the invention, a vehicle body part, according to claim 1, for a vehicle comprising a battery system is provided. The vehicle body part may further comprise attachment portions that are configured to be connected to the vehicle body for structural integration. In other words, the vehicle body part comprises the battery system carrier and is directly integrated into the vehicle body instead of being mounted or attached to the vehicle body.

In the context of the present invention, vehicles comprise a body structure (vehicle body) that is a supporting structure of the vehicle. Depending on the construction method of the vehicle, the vehicle body can be a vehicle frame, a self-supporting body (monocque) or a space frame type vehicle body. The vehicle body is constructed from vehicle body parts and is configured for load accommodation (power intake) during normal operation and in crash situations.

The vehicle body parts forming the vehicle body are connected in detachable or non-detachable fashion. The vehicle body can also be constructed in a monolithic fashion, either initially or by substance-to-substance bonding of the vehicle body parts. In any case, the vehicle body parts can be distinguished at least in functional terms, e.g. into crossbeams and longitudinal beams. The vehicle body can comprise further vehicle body parts that are connected with the vehicle body, e.g. bumpers. It is a common feature of all vehicle body parts that they increase the stiffness and/or the crash performance of the vehicle.

Usually, further attachment parts are connected to a vehicle body, such as boot lids, hoods, or mudguards. Depending on the type of vehicle body, certain parts of a vehicle can either be seen as vehicle body part or as attachment part, particularly when comparing chassis constructions and self-supporting bodies. In the context of the invention, vehicle body parts and attachment parts are always distinguished for a certain vehicle, i.e. they are nonidentical.

All further components of the vehicle, particularly the drive technology and aggregates, are connected at least indirectly to the vehicle body. In the context of the present invention, the aggregates comprise at least heating and cooling aggregates. Usually, energy supply aggregates such as batteries, a starter-generator and/or a fuel cell are also connected as aggregates to the vehicle body. However, in the context of the present invention, the vehicle body comprises a vehicle body part with an integrated battery system carrier that is configured for accommodating a plurality of battery cells. In other words, the vehicle body part constitutes at least part of a housing of the plurality of battery cells.

According to a preferred embodiment of the present invention, the battery system carrier is configured for accommodating a plurality of battery submodules, a control electronics assembly and connecting elements of the battery system. In other words, the battery system carrier is configured to accommodate a whole battery system and thus constitutes at least part of the housing of the battery system. Preferably, the control electronics assembly comprises a battery monitoring unit (BMU) and/or a battery management system (BMS). Alternatively, at least functions of the BMS may be realized outside from the battery system carrier. The control electronics assembly may comprise relays, fuses and electronics. The connecting elements may comprise high voltage (HV) and/or low voltage (LV) wiring.

In a preferred embodiment, the control electronics assembly is configured to provide one or more of the following functions: protecting the battery system from damage, prolonging the life of the battery system, and maintaining the battery system in a state in which it can meet the functional requirements of the application for which it was specified. The control electronics assembly may also be configured to provide one or more of the following functions: cell protection, charge control, state of charge determination, state of health determination, cell balancing, log book function, authentication, and identification of cells and signal communication.

According to a further preferred embodiment, the battery system carrier comprises a carrier frame with two longitudinal segments and two transverse segments that are perpendicular to the longitudinal segments and that are connected to the longitudinal segments. The battery system carrier further comprises a battery system cover that is connected to the carrier frame. Particularly preferred, the battery system cover spans across the whole carrier frame, i.e. covers the whole surface area enclosed by the carrier frame.

At least the battery system cover is preferably configured as part of a vehicle underbody. In other words, the carrier frame and the battery system cover are integrated in the vehicle body part that is at least part of a vehicle floor component. Further preferred, the vehicle underbody is separating a vehicle interior from a vehicle exterior and the carrier frame is configured for accommodating a plurality of battery cells disposed in the vehicle exterior.

Particularly preferred, the battery system carrier is configured for accommodating a plurality of removable battery component carriers. Therein each battery component carrier is accommodating a battery submodule that comprises a plurality of battery cells. Further, each battery component carrier is configured to be mechanically and electrically connected to other battery component carriers and/or to the battery system carrier in order to form a battery system. The battery system carrier may further be configured to accommodate an electronics component carrier accommodating the control electronics assembly.

The longitudinal segments and the transverse segments of the carrier frame may have aluminum extrusion profiles or plastic extrusion profiles (e.g. reinforced plastic extrusion profiles) and may be welded, glued, screwed or otherwise assembled together to form the carrier frame. The battery component carrier and the electronics component carrier may also have aluminum extrusion profiles, plastic extrusion profiles (e.g., reinforced plastic extrusion profiles) or may be made of rolled and welded steel carriers, and preferably comprise a U-shape, an L-shape, or a T-shape.

The component carriers may further comprise connection elements configured to be attached to and detached from the longitudinal segments or the transverse segments, e.g., to or from corresponding connection elements of the longitudinal segments or the transverse segments. The component carriers may have an integrated coolant duct or coolant channels in a ground plate and/or in side walls thereof. Preferably, the carrier frame comprises coolant ports configured to be connected to the cooling channels of the component carriers.

An embodiment of the present invention relates to a battery system according to claim 6. In other words, the battery system according to the invention comprises the vehicle body part as a part of the housing of the battery system and for providing mechanical integrity to the battery system.

In a preferred embodiment, the battery system carrier comprises a carrier frame with two longitudinal segments and two transverse segments. The latter are perpendicular to the longitudinal segments and connected to the longitudinal segments. The battery system carrier further comprises a battery system cover that is connected to the carrier frame. Particularly preferred, the battery system cover spans across the whole carrier frame, i.e. covers the whole surface area enclosed by the carrier frame.

At least the battery system cover is preferably configured as part of a vehicle underbody. In other words, the carrier frame and the battery system cover are integrated in the vehicle body part that is at least part of a vehicle floor component. Further preferred, the vehicle underbody is separating a vehicle interior from a vehicle exterior and the carrier frame is configured for accommodating a plurality of battery cells disposed in the vehicle exterior.

In a further preferred embodiment of the battery system, the carrier frame accommodates a plurality of removable battery component carriers. Therein, each battery component carrier accommodates at least one battery submodule comprising a plurality of battery cells. Further, each battery component carrier is individually detachable from the carrier frame. The battery system carrier may further be configured to accommodate an electronics component carrier accommodating the control electronics assembly.

The longitudinal segments and the transverse segments of the carrier frame may have aluminum extrusion profiles or plastic extrusion profiles (e.g. reinforced plastic extrusion profiles) and may be welded, glued, screwed or otherwise assembled together to form the carrier frame. The battery component carrier and the electronics component carrier may also have aluminum extrusion profiles, plastic extrusion profiles (e.g., reinforced plastic extrusion profiles) or may be made of rolled and welded steel carriers, and preferably comprise a U-shape, an L-shape, or a T-shape.

The component carriers may further comprise connection elements configured to be attached to and detached from the longitudinal segments or the transverse segments, e.g., to or from corresponding connection elements of the longitudinal segments or the transverse segments. The component carriers may have an integrated coolant duct or coolant channels in a ground plate and/or in side walls thereof. Preferably, the carrier frame comprises coolant ports configured to be connected to the cooling channels of the component carriers.

In a particularly preferred embodiment, each removable battery component carrier comprises a bottom plate and a pair of side walls that are perpendicular to the bottom plate and that extend along two opposite longitudinal edges of the bottom plate. Each battery component carrier further comprises a pair of end plates that are perpendicular to the bottom plate and to the side walls and that extend along two opposite transverse edges of the bottom plate. Further preferred, the end plates are mechanically coupled to the pair of side walls and/or to the bottom plate for fixing the plurality of battery cells together. The battery component carrier may further comprise a cell cover that is extending parallel to the bottom plate so that the cell cover, the bottom plate, the side walls and the end plates form an accommodating space for the battery sub-module.

Further preferred, each removable battery component carrier further comprises a cell connection and sensing unit (CCU) that is located between the cell cover and the battery submodule. The CCU may be configured for electrically interconnecting the battery cells in the battery submodule to a parallel or series circuit. The CCU may further be configured for electronically connecting to the battery cells in the battery submodule for voltage and temperature supervision of the cells.

According to a preferred embodiment, the battery system carrier may comprise an external signal port that is configured for electronically connecting the battery system to an external control unit. The external control unit may be a control circuit of one or more electrical consumers. The electronics component carrier, e.g., the control electronics assembly, may be electronically connected to at least one of the battery component carriers and to the external signal port of the battery system carrier for interconnecting the battery submodules and the electrical consumers via the external signal port.

The carrier frame may further comprise an external coolant port that is configured for being connected to an external coolant circuit and may further comprise a plurality of internal coolant ports that are configured for being connected to coolant channels in the component carriers for forming a coolant circuit throughout the battery system. Particularly preferred, the carrier frame comprises coolant ports configured to be connected to cooling channels disposed within the bottom plate of the removable battery component carriers.

An embodiment of the invention relates to a vehicle according to claim 13. Preferably, the battery system carrier is accommodating a plurality of battery submodules, a control electronics assembly and connecting elements. Hence, the battery system carrier is preferably accommodating the whole battery system and forms at least a part of the housing of the battery system.

Preferably, the control electronics assembly comprises a battery monitoring unit (BMU) and/or a battery management system (BMS). Alternatively, at least functions of the BMS may be realized outside from the battery system carrier. The control electronics assembly may comprise relays, fuses and electronics. The connecting elements may comprise high voltage (HV) and/or low voltage (LV) wiring.

In a preferred embodiment, the control electronics assembly is configured to provide one or more of the following functions: protecting the battery system from damage, prolonging the life of the battery system, and maintaining the battery system in a state in which it can meet the functional requirements of the application for which it was specified. The control electronics assembly may also be configured to provide one or more of the following functions: cell protection, charge control, state of charge determination, state of health determination, cell balancing, log book function, authentication, and identification of cells and signal communication.

According to a preferred embodiment of the vehicle according to the invention, the battery system carrier comprises a carrier frame with two longitudinal segments and two transverse segments that are perpendicular to the longitudinal segments and that are connected to the longitudinal segments. The battery system carrier further comprises a battery system cover that is connected to the carrier frame and that is a part of an underbody of the vehicle. According to the embodiment, the vehicle underbody is separating the vehicle interior from the vehicle exterior, the carrier frame is disposed in the vehicle exterior and the plurality of battery cells is accommodated in the carrier frame. In other words, the vehicle body part also provides a battery system cover that secures the vehicle interior against the battery cells.

Particularly preferred, the vehicle further comprises an underbody protection that is connected to the carrier frame. The underbody protection is configured for enclosing the plurality of battery cells that are accommodated within the carrier frame between the battery system cover and the underbody protection. Preferably, the underbody protection spans across the whole underbody of the vehicle or may extend over the carrier frame to cover further parts of the vehicle's underbody.

The above and other aspects of the present invention will be apparent from the dependent claims, the attached drawings and/or the following description of the attached drawings.

### Brief Description of the Drawings

Features will become apparent to those of ordinary skill in the art by describing in detail exemplary embodiments with reference to the attached drawings in which:
Fig. 1 illustrates a schematic perspective view of a vehicle body according to an embodiment;
Fig. 2 illustrates a schematic side view of a vehicle according to an embodiment;
Figs. 3 to 6 schematically illustrate the assembly process of a battery system according to an embodiment to a vehicle according to an embodiment;
Fig. 7 illustrates an exploded perspective view of a battery system according to an embodiment;
Fig. 8 illustrates an exploded perspective view of a removable battery component carrier according to an embodiment; and
Fig. 9 illustrates a schematic cross section of the removable battery component carrier of Fig. 8.

### Detailed Description of the Invention

Hereinafter, example embodiments of the present invention will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof may not be repeated. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention as claimed.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present invention. As used herein, the singular forms "a" and "an" are intended to include the plural forms as well, unless the context clearly indicates otherwise.

It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items. Expressions such as "at least one of," when preceding a list of elements, modify the entire list of elements and do not modify the individual elements of the list.

As used herein, the terms "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present invention refers to "one or more embodiments of the present invention."

In addition, the use of alternative language, such as "or," when describing embodiments of the present invention, refers to "one or more embodiments of the present invention" for each corresponding item listed. As used herein, the terms "use," "using," and "used" may be considered synonymous with the terms "utilize," "utilizing," and "utilized," respectively. Also, the term "exemplary" is intended to refer to an example or illustration.

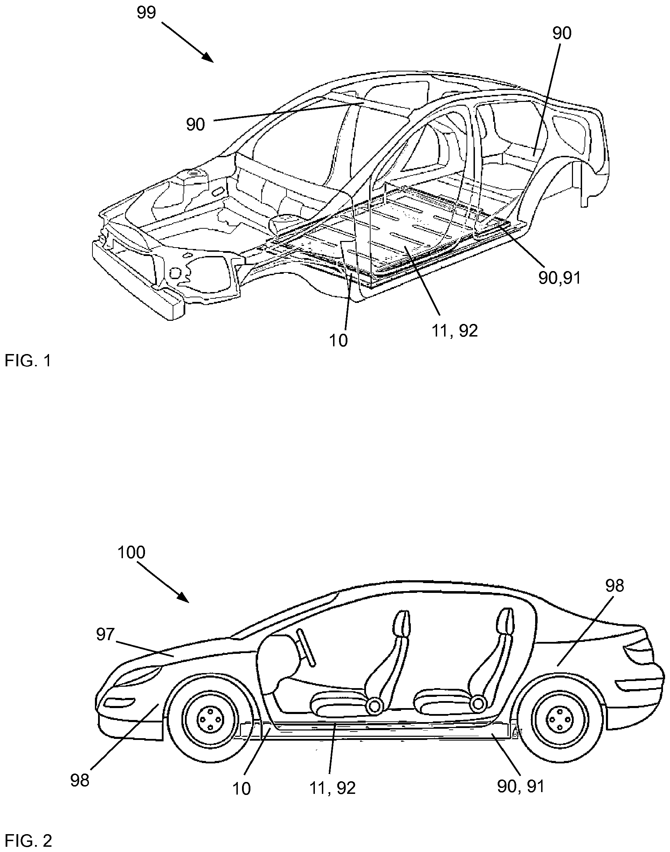

Referring to Figure 1 a schematic perspective view of a vehicle body 99 according to an embodiment is illustrated.

The vehicle body 99 shown in Figure 1 is constructed as a chassis or a frame comprising a plurality of vehicle body parts 90 that are firmly bonded, e.g. welded, to each other to form a monolithic vehicle frame 99. Further attachment parts, such as doors, the hood, the trunk lid etc., and aggregates, such as the drive technology, can be connected to the vehicle body 99 by suitable connection means (not shown).

As indicated in Figure 1 the vehicle body 99 comprises a plurality of crossbeams 90, e.g. a crossbeam 90 in the rear of the vehicle body 99 or a crossbeam 90 in the front of a roof portion of the vehicle body 99, as vehicle body parts 90. The vehicle body 99 further comprises a vehicle floor component 90 forming a floor of at least a passenger cabin of the vehicle body 99. The vehicle floor component 90 comprises a battery system carrier 91 that is integrated in the vehicle floor component 90. The battery system carrier 91 comprises a battery system cover 11 that is part of a vehicle underbody 92 and a carrier frame 10 extending below the vehicle underbody 92. The carrier frame 10 and the battery system cover 11 are monolithic with the vehicle floor component 90. The vehicle underbody 92 separates a vehicle interior, e.g. the passenger cabin, and a vehicle exterior. The carrier frame 10 is disposed in the vehicle exterior.

Referring to Figure 2 a schematic side view of a vehicle 100 according to an embodiment is illustrated. The vehicle 100 comprises a plurality of attachment parts that are connected to the vehicle body 99 of Figure 1, particularly a vehicle hood 97 and front and rear vehicle fenders 98. The vehicle 100 further comprises the vehicle floor component 90 as vehicle body part comprising a battery system carrier 91 with a carrier frame 10 and a battery system cover 11 as part of the vehicle underbody 92.

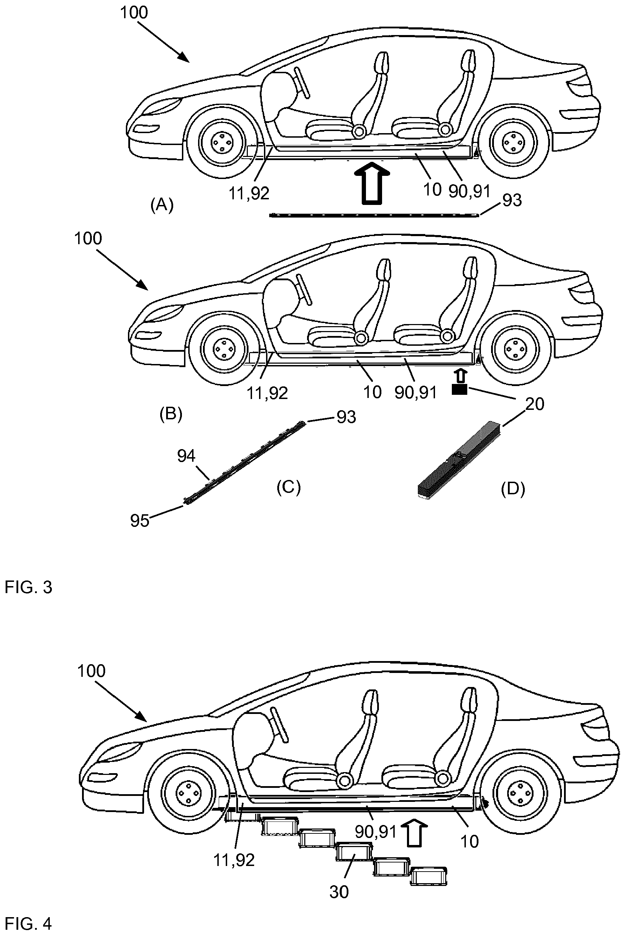

Referring to Figures 3 to 6 the assembly of a battery system 50 according to an exemplary embodiment of the present invention is illustrated.

In a first assembly step shown in Figure 3 (A), a high voltage (HV) and low voltage (LV) wiring carrier 93 as illustrated in Figure 3 (C) and comprising HV busbars 94 and a LV wiring harness 95 is mounted to the battery system carrier 91. This HV and LV wiring carrier 93 will provide the electrical and electronical connection between each battery submodule 40 of the battery system 50 to be assembled and the between the submodules 40 and a battery electric box (electronics component carrier) 20. The wiring carrier 93 may be formed as a central segment of a rectangular carrier frame 10 of the battery system carrier 91 and may further provide mechanical stability and/or further attachment regions for the subsequent attachment of module carriers 20, 30.

In a next assembly step shown in Figure 3 (B), the battery electrics box 20 or electronics component carrier 20 as illustrated in Figure 3 (D) is installed to the battery system carrier 91. The battery electrics box 20 comprises at least a battery junction box (BJB) and a battery management unit (BMU). Both, the HV and LV carrier 93 and the battery electrics box 20 are fixed to the carrier frame 10 by bolts, clips or a lock system.

In the next assembly step illustrated in Figure 4, a plurality of battery cells 1 is installed to the battery system carrier 91. The battery cells 1 are arranged as battery submodules 40 and mounted to a battery component carrier 30 as described in detail below. The battery component carrier 30 comprises a shaped steel or aluminum profile with integrated cooling and integrally providing the structural fixation of the cells 1, the electric cell connectors and the module electronics. A plurality of such battery component carriers 30 is mounted into the carrier frame 10 from below the vehicle 100. Each battery component carrier 30 is fixated to the carrier frame 10.

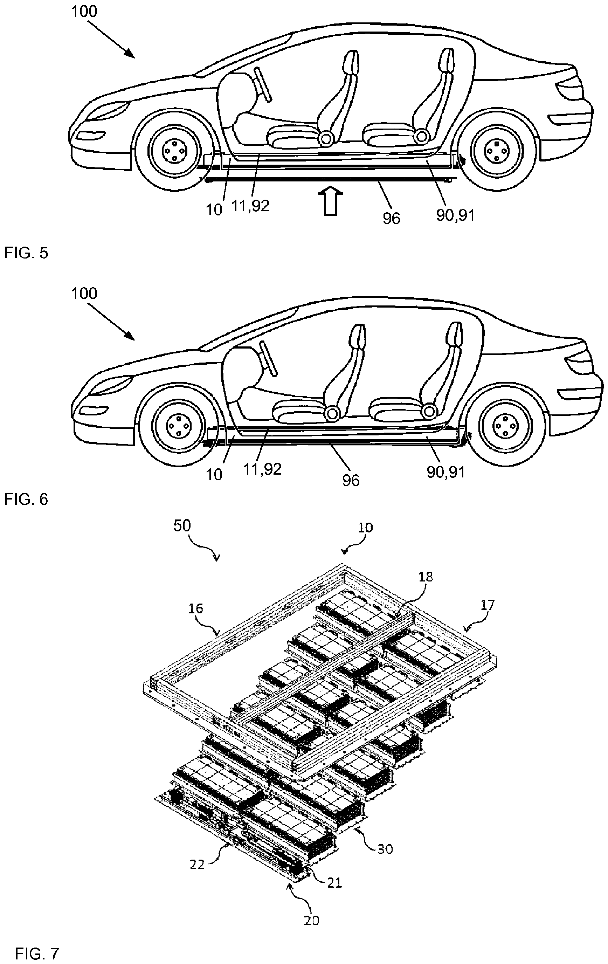

In a last assembly step illustrated in Figure 5, a underbody protection 96 is mounted to the vehicle floor component 91 from below the vehicle. As illustrated in Figure 6, the mounted underbody protection 96 thus encloses the battery component carriers 30 and the electronics component carrier 20 accommodated in the carrier frame 20 between the vehicle underbody 92 and the vehicle underbody protection 96.

Referring to Fig. 7, an exemplary embodiment of a carrier frame 10 is illustrated. Although according to the invention, the carrier frame 10 is integrated in a vehicle body part 91 and connected to the battery system cover 11, the carrier frame 10 is shown isolated for the ease of explanation.

The carrier frame 10 accommodates a removable electronics component carrier 20 and a plurality of removable battery component carriers 30. According to the exemplary embodiment of Figure 7 the carrier frame 10 accommodates six removable battery component carriers 30, but the number of removable battery component carriers 30 is not limited thereto.

Each of the removable battery component carriers 30 may comprise one or more battery submodules 40, each including a plurality of battery cells 1. According to the exemplary embodiment of Fig. 7 the removable battery component carrier 30 accommodates two battery submodules 40, but the number of battery submodules 40 is not limited thereto.

The carrier frame 10 comprises two longitudinal segments 16 and two transverse segments 17 forming a rectangular frame. One of the transverse segments 17 may comprise external signal ports configured to be connected to an external control unit (not shown) and an external power port configured to be connected to an external power circuit (not shown). The carrier frame may further comprise a central segment 18 extending parallel to the longitudinal segments 16 and dividing the accommodating space inside the carrier frame into two sub-spaces.

In a preferred embodiment, the wiring carrier 93 comprising the HV busbars 94 and the LV wiring harness 95 is used as the central segment 18. In other words, while the longitudinal segments 16 and transverse segments 17 are part of the carrier frame 10 formed monolithically with the vehicle body part 90, the external segment 18 is installed as wiring carrier 93 in a first assembly step of the battery system 50 to the vehicle 100. The wiring carrier 93 as central segment 18 provides further mechanical stability to the carrier frame 10 and may also provide attachment regions for attaching the electrics component carrier or one or more battery component carriers 30.

The electronics component carrier 20 comprises a bottom plate and a control electronics assembly 21 located on the bottom plate. The electronics component carrier 20 further comprises a signal port 22 for transmitting control signals between an external control circuit (not shown) and the control electronics assembly 21 and a power port 22 for electrically connecting the carrier frame 10 to an external power circuit (not shown), i.e. to a power circuit of a battery system, battery management system or directly to one or more electrical consumers.

Based on control signals, e.g. an actual power demand, the control electronics assembly 21 controls the battery submodules 40 on the battery component carriers 30 to provide an electric power that meets the actual demand. The control electronics assembly 21 is electrically connected to the electronics component carrier 20, that is electrically connected to the adjacent battery component carrier 30, which is electrically connected to the battery submodule 40 attached thereto and to the next adjacent battery component carrier 30 and so on. Via the electronical connection the control electronics assembly 21 transmits the signals for controlling the battery submodules 40. The electric current provided by the battery submodules 40 in response on these signals is transmitted via the electrical connection. Preferably the control signals are modulated on the currents or voltages between the first component carrier 20 and the second component carriers 30 or battery submodules 40.

At a lower surface of the bottom plate of the electronics component carrier 20 cooling channels, through which a coolant may flow. The electronics component carrier 20 is individually removable from the carrier frame 10, so that a replacement/repair of the control electronics assembly is simplified.

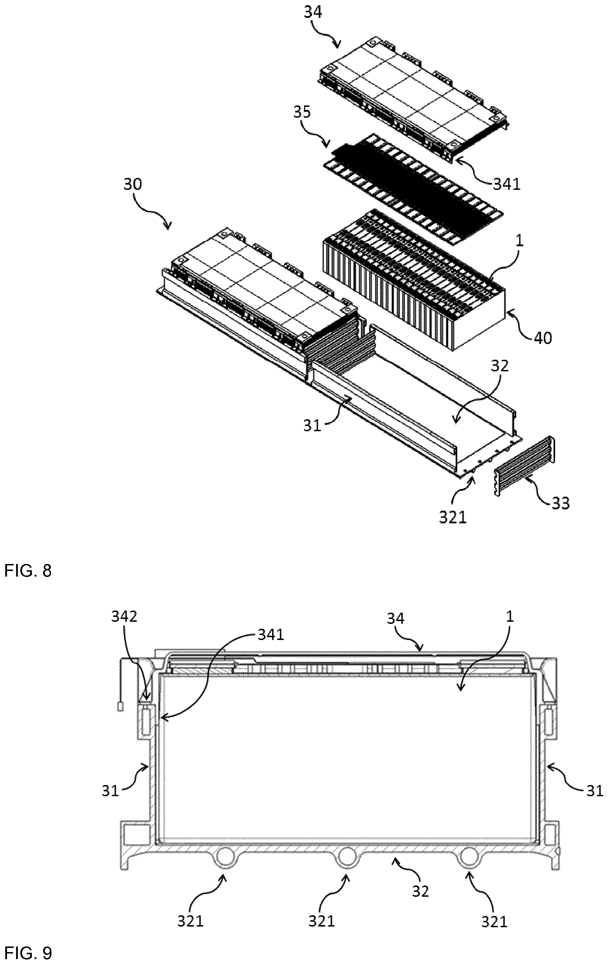

Referring to Figure 8, a removable battery component carrier 30 is shown, which is individually removable from the carrier frame 10. The battery component carrier 30 comprises connection elements (not shown) configured to be attached to corresponding connection elements of the longitudinal segments 16 of the carrier frame 10, e.g. screw holes, for fixing the battery component carrier 30 to the carrier frame 10. The battery component carrier 30 further comprises connecting elements (not shown) for electrically connecting the battery component carriers 30 to each other or to the electronics component carrier 20 within the battery system 50. The connecting elements comprise electrical connecting elements, e.g. busbars, for providing a high voltage power connection between the submodules 40 on the component carriers 30. The connecting elements further comprise electronical connecting elements, e.g. a wiring harness, for providing a low voltage data connection between the electronics component carrier 20 and a cell supervision circuit (CSC) or a cell connection and sensing unit (CCU) of the battery submodules 40.

The removable battery component carrier 30 comprises a bottom plate 32 and a pair of side walls 31 located at the longitudinal edges of the bottom plate 32 and extending in an upward direction from the bottom plate 32. In a preferred embodiment, the bottom plate 32 and the side walls 31 may be formed as a single piece. The bottom plate 32 and the side walls 31 may be made of an extruded aluminium profile, a reinforced plastic extrusion profile or they may be made of rolled and welded steel carriers comprising a bottom plate and walls.

The bottom plate 32 and the side walls 31 may include cooling channels independent of the cell direction. Figure 9 shows three cooling channels 321 formed in the bottom plate 32. A coolant distribution line connected to external coolant ports arranged on the transverse segments 17 of the carrier frame 10 may be formed, which comprises a plurality of connecting pieces, wherein each connecting piece connects the coolant distribution line to one of the cooling channels 321 in the bottom plate 32 via a respective coolant port (not shown) of the respective battery component carrier 30. A coolant is then provided by an external coolant circuit (not shown) to the external coolant ports of the carrier frame 10. Via the coolant distribution line the coolant is provided to the coolant ports of the electronics component carrier 20 and the plurality of battery component carriers 30 and flows through the respective cooling channels 321 in the respective bottom plates 32 towards the opposing transverse segment 17 and along another coolant distributing line back to the other one of the external coolant ports.

Referring to Figure 8, an exemplary embodiment of a battery submodule 40 includes a plurality of aligned secondary battery cells 1 with substantially planar shape. The battery cells 1 are assembled to a cell stack with a pair of end plates 33 provided on front surfaces of the outermost battery cells 1 and then mounted into the battery component carrier 30. Alternatively, one of the end plates 33 can be fixed to the side walls 31 and/or to the bottom plate 32 of the battery component carrier 30 first and then the battery cell stack is mounted into the battery component carrier 30. At last the second end plate 33 is fixed to the other elements of the battery component carrier 30. The battery cell stack can be preassembled in a longitudinal direction with the end plates 33, which may be provided on one or both front surfaces of the battery cell stack. The preassembly can be realized e.g. by means of an elastic element, a spring or a screw.

The end plates 33 are then mechanically coupled to the side walls 31 of the battery component carrier 30. The joining technology between the end plates 33 and the bottom plate 32 and side walls 31 of the battery component carrier 30 may be some kind of welding technology - e.g. friction stir welding or tungsten inert gas welding - clinching, screwing, riveting, wedging or gluing. Thereby the plurality of battery cells 1 is fixed together in a first (transverse) direction by the side walls 31 and in a second (longitudinal) direction by the end plates 33.

The end plates 33 may be formed of an extruded aluminium profile, an aluminium or steel sheet metal, an aluminium casted part or a reinforced plastic extrusion profile or casted part. The end plates 33 provide stiffness and mechanical stability to the battery submodule 40. The end plates 33 may also counteract swelling of the battery cells 1, in that the end plates 33 absorb and guide the swelling forces of the cells into the battery component carrier 30. Swelling of the battery cells 1 occurs due to the cell aging processes.

The battery cells 1 are further tightened in a third (vertical) direction by a cell cover 34 located on top of the battery cell stack. The cell cover 34 is fixed to the side walls 31 of the battery component carrier 30. For instance, the cell cover 34 may be clamped between the battery cells 1 and the side walls 31, e.g. the cell cover 34 may comprise a pair of clamps 341 located at a side portion of the cell cover 34 and extending in a downward direction, which are configured to be inserted between the battery cells 1 and the side walls 31. Additionally, the cell cover 34 may be fastened to the side walls 31, e.g. by means of screws 342 as shown in Figure 9, or clipped in another way to the side walls 31 of the battery component carrier 30. The cell cover 34 does not only keep the battery cells 1 in place but also has a touch protection function.

A cell connection and sensing unit (CCU) 35 including cell connectors, sensors and electronics may be provided between the cell cover 34 and the battery submodule 40. The CCU 35 includes a flexible circuit board (FCB) with connection terminals to be connected to the terminals of the battery cells 1 and at least one semiconductor device formed on an upper surface of the circuit board. The circuit board also includes a wiring pattern (not shown) formed on a surface of the circuit board. A main body of the circuit board may be formed of a flexible electrically insulating material like polyimide (PI) or polyethylene (PET). The wiring pattern may be made of an electrically conductive material, such as copper (Cu), titanium (Ti), nickel (Ni), or palladium (Pd).

The semiconductor device is adapted to apply signals for controlling operations of the battery cells 1. In particular, the semiconductor device may control a charging or discharging extent through high voltage connections to the battery cells 1. In addition, the semiconductor device may apply signals indicating voltages, current and state of charge (SOC) of the battery cells 1 to prevent for example over-charge or over-discharge.

In other words, the CCU 35 provides the main power path by interconnecting the terminals of the battery cells 1 and the terminals of the battery submodule 40. The CCU 35 further comprises voltage sensing lines (not shown) for voltage sensing and cell balancing. The CCU 35 may further comprise temperature sensors for temperature supervision of the battery cells 1. By utilizing a light flexible carrier for the CCU 35 some relative motion in case of cell breathing and cell swelling can be compensated. Optionally the CCU 35 also provides mounting possibilities for a printed circuit board of a cell supervision circuit (CSC-PCB).

The battery submodule 40 is mechanically fixed to the battery component carrier 30 by being tightly enclosed within the accommodating space defined at least by the side walls 31 and the bottom plate 32. The battery submodule 40 may be further glued to the bottom plate and/or the side walls 31 to provide further vertical fixation.

The removable battery component carrier 30 with the battery cells 1, endplates 33, cell cover 34 and further additional parts can be mounted into the carrier frame 10 of the battery system 50 so that it is separately removable, even when the battery system 50 is mounted inside the vehicle 100.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips.

Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein.

The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the exemplary embodiments of the present invention as claimed.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### Reference signs

- 1: secondary battery cell
- 10: carrier frame
- 11: battery system cover
- 16: longitudinal segment
- 17: transverse segment
- 18: central segment
- 20: removable electronics component carrier
- 21: control electronics assembly
- 22: signal/power port
- 30: removable battery component carrier
- 31: side walls
- 32: bottom plate
- 321: cooling channel
- 33: end plate
- 34: cell cover
- 341: cell cover clamp
- 342: screw
- 35: cell connection and sensing unit (CCU)
- 40: battery submodule
- 50: battery system
- 90: vehicle body part
- 91: battery system carrier
- 92: vehicle underbody
- 93: wiring carrier
- 94: HV busbars
- 95: LV wiring harness
- 96: underbody protection
- 97: vehicle hood
- 98: vehicle fender
- 99: vehicle body
- 100: vehicle

## Claims

1. Vehicle body part (90) for a vehicle (100) comprising a battery system (50), the vehicle body part (90) being configured for being structurally integrated in the vehicle body (99) and comprising an integrated battery system carrier (91) configured for accommodating a plurality of battery cells (1), the battery system carrier (91) comprising a carrier frame (10) extending below a vehicle underbody (92), the carrier frame (10) is formed monolithically with the vehicle body part (90).

2. Vehicle body part (90) according to claim 1, wherein the battery system carrier (91) is configured for accommodating a plurality of battery submodules (40), a control electronics assembly (21) and connecting elements of the battery system (93).

3. Vehicle body part (90) according to claim 1 or 2, wherein the battery system carrier (91) comprises a battery system cover (11) connected to the carrier frame (10), wherein the carrier frame (10) comprises two longitudinal segments (16) and two transverse segments (17) perpendicular to the longitudinal segments (16) and connected to the longitudinal segments (16), and wherein at least the battery system cover (11) is configured as part of the vehicle underbody (92).

4. Vehicle body part (90) according to claim 3, wherein the vehicle underbody (92) is separating a vehicle interior from a vehicle exterior and wherein the carrier frame (10) is configured for accommodating a plurality of battery cells (1) disposed in the vehicle exterior.

5. Vehicle body part (90) according to any one of the claims 1 to 4, wherein the battery system carrier (91) is configured for accommodating a plurality of removable battery component carriers (30), each battery component carrier (30) accommodating a battery submodule (40) comprising a plurality of battery cells (1) and being configured to be mechanically and electrically connected to other removable battery component carriers (30) and/or to the battery system carrier (10) to form a battery system (50).

6. Battery system (50) for a vehicle (100), comprising:
a vehicle body part (90) according to any one of the claims 1 to 5, and
a plurality of battery cells (1) disposed within the battery system carrier (91).

7. Battery system (50) according to claim 6, wherein the battery system carrier (91) comprises a battery system cover (11) connected to the carrier frame (10), wherein the carrier frame (10) comprises two longitudinal segments (16) and two transverse segments (17) perpendicular to the longitudinal segments (16) and connected to the longitudinal segments (16), and wherein at least the battery system cover (11) is integrated in the vehicle underbody (92).

8. Battery system (50) according to claim 7, wherein the carrier frame (10) accommodates a plurality of removable battery component carriers (30), each accommodating at least one battery submodule (40) comprising a plurality of battery cells (1) and each being individually detachable from the carrier frame (10).

9. Battery system (50) according to claim 8, wherein each removable battery component carrier (30) comprises a bottom plate (32); a pair of side walls (31) perpendicular to the bottom plate (32) and extending along two opposite longitudinal edges of the bottom plate (32); a pair of end plates (33) perpendicular to the bottom plate (32) and to the side walls (31) and extending along two opposite transverse edges of the bottom plate (32), the end plates (33) being mechanically coupled to the pair of side walls (31) and/or to the bottom plate (32) for fixing the plurality of battery cells (1) together; and a cell cover (34) extending parallel to the bottom plate (32) so that the cell cover (34), the bottom plate (32), the side walls (31) and the end plates (33) form an accommodating space for the battery submodule (40).

10. Battery system (50) according to claim 9, wherein each removable battery component carrier (30) further comprises a cell connection and sensing unit (35) located between the cell cover (34) and the battery submodule (40).

11. Battery system (50) according to any one of claims 7 to 10, further comprising an electronics component carrier (20) accommodating a control electronics assembly (21) and being individually detachable from the carrier frame (10).

12. Vehicle body part (90) according to claim 5 or battery system (50) according to any one of claims 8 to 11, wherein the carrier frame (10) comprises coolant ports configured to be connected to cooling channels (321) disposed within bottom plates (32) of the removable battery component carriers (30).

13. Vehicle (100) with integrated battery system (50) according to any one of claims 6 to 11.

14. Vehicle (100) according to claim 13, wherein the battery system carrier (91) comprises
a battery system cover (11) connected to the carrier frame (10), wherein the carrier frame (10) comprises two longitudinal segments (16) and two transverse segments (17) perpendicular to the longitudinal segments (16) and connected to the longitudinal segments (16), and the battery system cover (11) is part of a vehicle underbody (92), wherein the vehicle underbody (92) is separating a vehicle interior from a vehicle exterior, and the carrier frame (10) is disposed in the vehicle exterior, and
wherein the plurality of battery cells (1) is accommodated in the carrier frame (10).

15. Vehicle (100) according to claim 14, further comprising an underbody protection (96) connected to the carrier frame (10) and configured for enclosing the plurality of battery cells (1) accommodated within the carrier frame (10) between the battery system cover (11) and the underbody protection (96).

## Patentansprüche

1. Fahrzeugkarosserieteil (90) für ein Fahrzeug (100), aufweisend ein Batteriesystem (50), wobei das Fahrzeugkarosserieteil (90) konfiguriert ist, um baulich in der Fahrzeugkarosserie (99) integriert zu sein, und einen integrierten Batteriesystemträger (91), der konfiguriert ist, um eine Vielzahl von Batteriezellen (1) aufzunehmen, aufweist, wobei der Batteriesystemträger (91) einen Trägerrahmen (10), der sich unterhalb einer Fahrzeugunterkarosserie (92) erstreckt, aufweist, wobei der Trägerrahmen (10) monolithisch mit dem Fahrzeugkarosserieteil (90) ausgebildet ist.

2. Fahrzeugkarosserieteil (90) nach Anspruch 1, wobei der Batteriesystemträger (91) konfiguriert ist, um eine Vielzahl von Batterieuntermodulen (40), eine Steuerungselektronikanordnung (21) und Verbindungselemente des Batteriesystems (93) aufzunehmen.

3. Fahrzeugkarosserieteil (90) nach Anspruch 1 oder 2, wobei der Batteriesystemträger (91) eine Batteriesystemabdeckung (11), die mit dem Trägerrahmen (10) verbunden ist, aufweist, wobei der Trägerrahmen (10) zwei Längssegmente (16) und zwei Quersegmente (17), die perpendikulär zu den Längssegmenten (16) sind und mit dem Längssegmenten (16) verbunden sind, aufweist, und wobei zumindest die Batteriesystemabdeckung (11) als Teil der Fahrzeugunterkarosserie (92) konfiguriert ist.

4. Fahrzeugkarosserieteil (90) nach Anspruch 3, wobei die Fahrzeugunterkarosserie (92) einen Fahrzeuginnenbereich von einem Fahrzeugaußenbereich trennt und wobei der Trägerrahmen (10) konfiguriert ist, um eine Vielzahl von Batteriezellen (1), die im Fahrzeugaußenbereich angeordnet sind, aufzunehmen.

5. Fahrzeugkarosserieteil (90) nach einem der Ansprüche 1 bis 4, wobei der Batteriesystemträger (91) konfiguriert ist, um eine Vielzahl abnehmbarer Batteriekomponententräger (30) aufzunehmen, wobei jeder Batteriekomponententräger (30) ein Batterieuntermodul (40), das eine Vielzahl von Batteriezellen (1) aufweist, aufnimmt und konfiguriert ist, um mit weiteren abnehmbaren Batteriekomponententrägem (30) und/oder mit dem Batteriesystemträger (10) mechanisch und elektrisch verbunden zu werden, um ein Batteriesystem (50) auszubilden.

6. Batteriesystem (50) für ein Fahrzeug (100), aufweisend:
ein Fahrzeugkarosserieteil (90) nach einem der Ansprüche 1 bis 5, und
eine Vielzahl von Batteriezellen (1), die im Batteriesystemträger (91) angeordnet sind.

7. Batteriesystem (50) nach Anspruch 6, wobei der Batteriesystemträger (91) eine Batteriesystemabdeckung (11), die mit dem Trägerrahmen (10) verbunden ist, aufweist, wobei der Trägerrahmen (10) zwei Längssegmente (16) und zwei Quersegmente (17), die perpendikulär zu den Längssegmenten (16) sind und mit dem Längssegmenten (16) verbunden sind, aufweist, und wobei zumindest die Batteriesystemabdeckung (11) in der Fahrzeugunterkarosserie (92) integriert ist.

8. Batteriesystem (50) nach Anspruch 7, wobei der Trägerrahmen (10) eine Vielzahl abnehmbarer Batteriekomponententräger (30) aufweist, die jeweils zumindest ein Batterieuntermodul (40), das eine Vielzahl von Batteriezellen (1) aufweist, aufnehmen und jeweils einzeln vom Trägerrahmen (10) abnehmbar sind.

9. Batteriesystem (50) nach Anspruch 8, wobei jeder abnehmbare Batteriekomponententräger (30) aufweist: eine Bodenplatte (32); ein Paar von Seitenwänden (31), die perpendikulär zur Bodenplatte (32) sind und sich entlang von zwei gegenüberliegenden Längsrändern der Bodenplatte (32) erstrecken; ein Paar von Endplatten (33), die perpendikulär zur Bodenplatte (32) und zu den Seitenwänden (31) sind und sich entlang von zwei gegenüberliegenden Querrändern der Bodenplatte (32) erstrecken, wobei die Endplatten (33) mit dem Paar von Seitenwänden (31) und/oder mit der Bodenplatte (32) mechanisch gekoppelt sind, um die Vielzahl der Batteriezellen (1) aneinander zu befestigen; und eine Zellenabdeckung (34), die sich parallel zur Bodenplatte (32) erstreckt, so dass die Zellenabdeckung (34), die Bodenplatte (32), die Seitenwände (31) und die Endplatten (33) einen Aufnahmeraum für das Batterieuntermodul (40) ausbilden.

10. Batteriesystem (50) nach Anspruch 9, wobei jeder abnehmbare Batteriekomponententräger (30) ferner eine Zellenverbindungs- und -erfassungseinheit (35), die zwischen der Zellenabdeckung (34) und dem Batterieuntermodul (40) angeordnet ist, aufweist.

11. Batteriesystem (50) nach einem der Ansprüche 7 bis 10, ferner aufweisend einen Elektronikkomponententräger (20), der eine Steuerungselektronikanordnung (21) aufnimmt und einzeln vom Trägerrahmen (10) abnehmbar ist.

12. Fahrzeugkarosserieteil (90) nach Anspruch 5 oder Batteriesystem (50) nach einem der Ansprüche 8 bis 11, wobei der Trägerrahmen (10) Kühlmittelöffnungen aufweist, die konfiguriert sind, um mit Kühlkanälen (321), die in Bodenplatten (32) der abnehmbaren Batteriekomponententräger (30) angeordnet sind, verbunden zu werden.

13. Fahrzeug (100) mit integriertem Batteriesystem (50) nach einem der Ansprüche 6 bis 11.

14. Fahrzeug (100) nach Anspruch 13, wobei der Batteriesystemträger (91) eine Batteriesystemabdeckung (11), die mit dem Trägerrahmen (10) verbunden ist, aufweist, wobei der Trägerrahmen (10) zwei Längssegmente (16) und zwei Quersegmente (17), die perpendikulär zu den Längssegmenten (16) sind und mit dem Längssegmenten (16) verbunden sind, aufweist, und wobei die Batteriesystemabdeckung (11) Teil einer Fahrzeugunterkarosserie (92) ist,
wobei die Fahrzeugunterkarosserie (92) einen Fahrzeuginnenbereich von einem Fahrzeugaußenbereich trennt und wobei der Trägerrahmen (10) im Fahrzeugaußenbereich angeordnet ist, und
wobei die Vielzahl der Batteriezellen (1) im Trägerrahmen (10) aufgenommen ist.

15. Fahrzeug (100) nach Anspruch 14, ferner aufweisend einen Unterkarosserieschutz (96), der mit dem Trägerrahmen (10) verbunden ist und konfiguriert ist, um die Vielzahl der Batteriezellen (1), die im Trägerrahmen (10) zwischen der Batteriesystemabdeckung (11) und dem Unterkarosserieschutz (96) aufgenommen ist, zu umschließen.

## Revendications

1. Pièce de carrosserie de véhicule (90) pour un véhicule (100) comprenant un système de batterie (50), la pièce de carrosserie de véhicule (90) étant configurée pour être structurellement intégrée dans la carrosserie de véhicule (99) et comprenant un support de système de batterie (91) intégré configuré pour loger une pluralité d'éléments de batterie (1), le support de système de batterie (91) comprenant un châssis de support (10) s'étendant au-dessous d'un bas de caisse de véhicule (92), le châssis de support (10) est formé de manière monolithique avec la pièce de carrosserie de véhicule (90).

2. Pièce de carrosserie de véhicule (90) selon la revendication 1, dans laquelle le support de système de batterie (91) est configuré pour loger une pluralité de sous-modules de batterie (40), un ensemble électronique de commande (21) et des éléments de connexion du système de batterie (93).

3. Pièce de carrosserie de véhicule (90) selon la revendication 1 ou 2, dans laquelle le support de système de batterie (91) comprend un capot de système de batterie (11) relié au châssis de support (10), dans laquelle le châssis de support (10) comprend deux segments longitudinaux (16) et deux segments transversaux (17) perpendiculaires aux segments longitudinaux (16) et reliés aux segments longitudinaux (16), et dans laquelle au moins le capot de système de batterie (11) est configuré comme faisant partie du bas de caisse de véhicule (92).

4. Pièce de carrosserie de véhicule (90) selon la revendication 3, dans laquelle le bas de caisse de véhicule (92) sépare un intérieur de véhicule d'un extérieur de véhicule et dans laquelle le châssis de support (10) est configuré pour recevoir une pluralité d'éléments de batterie (1) disposés dans l'extérieur de véhicule.

5. Pièce de carrosserie de véhicule (90) selon l'une quelconque des revendications 1 à 4, dans laquelle le support de système de batterie (91) est configuré pour loger une pluralité de supports de composant de batterie (30) amovibles, chaque support de composant de batterie (30) logeant un sous-module de batterie (40) comprenant une pluralité d'éléments de batterie (1) et étant configuré pour être mécaniquement et électriquement relié à d'autres supports de composant de batterie (30) amovibles et/ou au support de système de batterie (10) pour former un système de batterie (50).

6. Système de batterie (50) pour un véhicule (100), comprenant :
une pièce de carrosserie de véhicule (90) selon l'une quelconque des revendications 1 à 5, et
une pluralité d'éléments de batterie (1) disposés au sein du support de système de batterie (91).

7. Système de batterie (50) selon la revendication 6, dans lequel le support de système de batterie (91) comprend un capot de système de batterie (11) relié au châssis de support (10), dans lequel le châssis de support (10) comprend deux segments longitudinaux (16) et deux segments transversaux (17) perpendiculaires aux segments longitudinaux (16) et reliés aux segments longitudinaux (16), et dans lequel au moins le capot de système de batterie (11) est intégré dans le bas de caisse de véhicule (92) .

8. Système de batterie (50) selon la revendication 7, dans lequel le châssis de support (10) loge une pluralité de supports de composant de batterie (30) amovibles, chacun logeant au moins un sous-module de batterie (40) comprenant une pluralité d'éléments de batterie (1) et chacun étant individuellement détachable du châssis de support (10).

9. Système de batterie (50) selon la revendication 8, dans lequel chaque support de composant de batterie (30) amovible comprend une plaque inférieure (32) ; une paire de parois latérales (31) perpendiculaires à la plaque inférieure (32) et s'étendant le long de deux bords longitudinaux opposés de la plaque inférieure (32) ; une paire de plaques d'extrémité (33) perpendiculaires à la plaque inférieure (32) et aux parois latérales (31) et s'étendant le long de deux bords transversaux opposés de la plaque inférieure (32), les plaques d'extrémité (33) étant mécaniquement couplées à la paire de parois latérales (31) et/ou à la plaque inférieure (32) pour fixer la pluralité d'éléments de batterie (1) ensemble ; et un capot d'élément (34) s'étendant en parallèle de la plaque inférieure (32) de sorte que le capot d'élément (34), la plaque inférieure (32), les parois latérales (31) et les plaques d'extrémité (33) forment un espace de réception pour le sous-module de batterie (40).

10. Système de batterie (50) selon la revendication 9, dans lequel chaque support de composant de batterie (30) amovible comprend en outre une unité de connexion et de détection d'élément (35) située entre le capot d'élément (34) et le sous-module de batterie (40).

11. Système de batterie (50) selon l'une quelconque des revendications 7 à 10, comprenant en outre un support de composant électronique (20) logeant un ensemble électronique de commande (21) et étant individuellement détachable du châssis de support (10).

12. Pièce de carrosserie de véhicule (90) selon la revendication 5 ou système de batterie (50) selon l'une quelconque des revendications 8 à 11, où le châssis de support (10) comprend des orifices pour liquide de refroidissement configurés pour être reliés à des canaux de refroidissement (321) disposés au sein de plaques inférieures (32) des supports de composant de batterie (30) amovibles.

13. Véhicule (100) ayant un système de batterie (50) intégré selon l'une quelconque des revendications 6 à 11.

14. Véhicule (100) selon la revendication 13, dans lequel le support de système de batterie (91) comprend un capot de système de batterie (11) relié au châssis de support (10), dans lequel le châssis de support (10) comprend deux segments longitudinaux (16) et deux segments transversaux (17) perpendiculaires aux segments longitudinaux (16) et reliés aux segments longitudinaux (16), et le capot de système de batterie (11) fait partie d'un bas de caisse de véhicule (92),
dans lequel le bas de caisse de véhicule (92) sépare un intérieur de véhicule d'un extérieur de véhicule, et le châssis de support (10) est disposé dans l'extérieur de véhicule, et
dans lequel la pluralité d'éléments de batterie (1) est logée dans le châssis de support (10).

15. Véhicule (100) selon la revendication 14, comprenant en outre une protection de bas de caisse (96) reliée au châssis de support (10) et configurée pour enfermer la pluralité d'éléments de batterie (1) logée au sein du châssis de support (10) entre le capot de système de batterie (11) et la protection de bas de caisse (96).
